# EUROPEAN PATENT SPECIFICATION

(11) **EP 2 076 574 B1**
(45) Date of publication and mention of the grant of the patent: **05.12.2012**
(21) Application number: 07844619.2
(22) Date of filing: 25.10.2007
(51) Int. Cl.: C09J 5/00, C09J 5/10

(54) **METHOD OF PRODUCING FLEXIBLE LAMINATES**
VERFAHREN ZUR HERSTELLUNG VON FLEXIBLEN LAMINATEN
PROCÉDÉ POUR PRODUIRE DES STRATIFIÉS SOUPLES

(30) Priority: 26.10.2006 US 586499
(43) Date of publication of application: 08.07.2009
(73) Proprietor: Ashland Licensing and Intellectual Property LLC, Dublin, OH 43017 (US)
(72) Inventor: BOOTH, Gregory E., Hilliard, OH 43026 (US); JOHNSON, Randy A., Hilliard, OH 43026 (US); CARLSON, Gary M., Dublin, OH 43017-1652 (US); HARVEY, Raymond Scott, Worthington, OH 43085 (US); MOY, Thomas M., Hilliard, OH 43026 (US)
(74) Representative: Bülle, Jan
(86) International application number: PCT/US2007/082561
(87) International publication number: WO 2008/052134

(56) References cited:
- WO-A1-95/08579
- DE-A1- 19 840 318
- GB-A- 2 188 327
- US-A- 4 366 193
- US-A- 4 788 083
- US-A- 5 478 897
- US-A- 5 853 859
- US-A1- 2006 065 357
- US-B1- 6 482 523
- US-B2- 7 105 207

## Description

The present disclosure relates to a method for producing a flexible laminate packaging comprising:
(a) applying a urethane adhesive to at least one of at least two flexible substrates wherein the at least two flexible substrates may be the same or different materials independently selected from the group consisting of plastic sheets, metal sheets and metalized plastic sheets;
(b) laminating the at least two flexible substrates with the urethane adhesive between the substrates to form a flexible laminate and
(c) allowing the urethane adhesive to cure forming a flexible laminate,
wherein the urethane adhesive comprises
- at least one polyisocyanate;
- at least one polyfunctional curative selected from the group consisting of hydroxypolyesters, hydroxypolyethers, hydroxypolythioesters, hydroxypolyacetals, hydroxypolycarbonates, dimeric fatty alcohols, esteramides, polyetherpolyols, polyesterpolyols, polycarbonatepolyols, ethylene glycol, triethylene glycol, tetraethylene glycol, 1,2- and 1,3-propanediol, 1,4- and 1,3-butanediol, 1,6-hexanediol, 1,8-octanediol, neopentyl glycol, 1,4-bis-(hydroxymethyl)-cyclohexane, bis-(hydroxymethyl)-(tricycle-[5.2.1.0^{2.6}]-decane, 2-methyl-1,3-propanediol, 2,2,4-trimethylpentanediol, 2-ethyl-1,3-hexanediol, dipropylene glycol, polypropylene glycols, dibutylene glycol, polybutylene glycols, bisphenol A, tetra-bromobisphenol A, glycerol, trimethylolpropane, 1,2,6-hexanetriol, 1,2,4-butanetriol, pentaerythritol, quinitol, mannitol, sorbitol, methylglycoside 1,4:3,6-dianhydrohexitol and mixtures thereof;
- a metallic based catalyst selected from the group consisting of dibutyltindilaurate, stannous acetate, stannic oxide, stannous octoate, dibutyltin dioctoate, tin mercaptides, stannous citrate, stannous oxylate, tetra-phenyl tin, tetra-butyl tin, tri-n-butyl tin acetate, di-alkyl tin dicarboxylates, bismuth tricarboxylates, bismuth nitrate, bismuth sulfide, basic bismuth dicarboxylates and mixtures thereof; and
- at least one catalyst blocking agent comprising a mercapto compound, or a polyphenol with adjacent hydroxyl groups, or both.
The method allows for faster and more economical production of flexible laminates. The disclosure also relates to laminated flexible packaging produced from the method.

Multiple layer flexible laminates laminated with adhesives are used in a wide variety of applications. The specific application of the flexible laminate drives the type and cost of a particular lamination technology. Urethane adhesives for flexible laminates offer excellent adhesion, clarity, processing and product resistance as well as 100% solids for environmental advantages. Flexible laminates can provide intense and colorful graphics that can be buried and protected within the laminated structure. Typically, 2 to 4 films are laminated together to produce a structure that possesses the properties of each incorporated film. Cost and product performance dictate which types of film substrates are used. For example, bottle labels, fresh cut produce, meat and cheese packaging often utilize aromatic urethane adhesives in flexible laminate packaging.

However, more demanding applications like hot-fill and retort typically use aliphatic urethane adhesives which often cure slower than aromatic urethane adhesives. Typically, flexible laminates produced from aliphatic urethane requires 5-14 days to fully cure. Often hot rooms are utilized to store the laminated product at temperatures of 100-110°F to shorten the urethane cure time to 3-5 days. Even shorter urethane cure times for the laminate are desirable to increase production rates and decrease costs. Ideally, the urethane adhesive should not cure until the urethane adhesive is applied between the substrate films and then should cure quickly after the substrates are laminated together.

Patent DE 19840318 A1 (US 6548615 B1) relates to reactive binding agents with an extended pot life which consist of isocyanate-containing compounds and polyols, characterized in that they also contain a catalyst combination consisting of an organic tin or bismuth compound, a thiol group-containing compound or a polyphenol which is able to react with an isocyanate in the presence of an activator, and a hydrolyzable halogen compound. WO 9508579 A1 discloses a polyol/polyisocyanate adhesive system having an isocyanate component and a catalyzed component which form a heat-cured composition when admixed and heated above a threshold temperature. An object of U.S. Patent No. 6482523 B1 is the provision of an adhesive for lamination comprising a resin having a specific dynamic wettability and a polyisocyanate curing agent. Tin or bismuth complex catalysts and trigger cure of coatings therewith are known from patent GB 2188327 A. Thereby, the catalyst is effective for the reaction of a hydroxyl compound and an isocyanate.

The present disclosure relates to a method of producing flexible laminates and to flexible laminates produced by the method. The flexible laminates are useful in flexible laminate packaging. The method involves laminating flexible substrates with a urethane adhesive and allowing the urethane adhesive to cure. The urethane adhesive comprises at least one polyisocyanate, at least one polyfunctional curative selected from the group consisting of hydroxypolyesters, hydroxypolyethers, hydroxypolythioesters, hydroxypolyacetals, hydroxypolycarbonates, dimeric fatty alcohols, esteramides, polyetherpolyols, polyesterpolyols, polycarbonatepolyols, ethylene glycol, triethylene glycol, tetraethylene glycol, 1,2- and 1,3-propanediol, 1,4-and 1,3-butanediol, 1,6-hexanediol, 1,8-octanediol, neopentyl glycol, 1,4-bis-(hydroxymethyl)-cyclohexane, bis-(hydroxymethyl)-(tricycle-[5.2.1.0^{2.6}]-decane, 2-methyl-1,3-propanediol, 2,2,4-trimethylpentanediol, 2-ethyl-1,3-hexanediol, dipropylene glycol, polypropylene glycols, dibutylene glycol, polybutylene glycols, bisphenol A, tetra-bromobisphenol A, glycerol, trimethylolpropane, 1,2,6-hexanetriol, 1,2,4-butanetriol, pentaerythritol, quinitol, mannitol, sorbitol, methylglycoside 1,4:3,6-dianhydrohexitol and mixtures thereof; at least one metal based catalyst selected from the group consisting of dibutyltindilaurate, stannous acetate, stannic oxide, stannous octoate, dibutyltin dioctoate, tin mercaptides, stannous citrate, stannous oxylate, tetra-phenyl tin, tetra-butyl tin, tri-n-butyl tin acetate, di-alkyl tin dicarboxylates, bismuth tricarboxylates, bismuth nitrate, bismuth sulfide, basic bismuth dicarboxylates and mixtures thereof; and at least one catalyst blocking agent comprising a mercapto compound, or a polyphenol with adjacent hydroxyl groups, or both. The catalyst blocking agent allows for improved control of the curing rate of the urethane adhesive in the flexible laminate. In various aspects of the disclosure, the curing rate of the urethane adhesive can be controlled with heat, radiation such as actinic radiation, e-beam radiation or a combination of these. Some examples of a heat source arc heated NIP, infra-red lamps and microwave radiation.

Still other objects and advantages of the present disclosure will become readily apparent by those skilled in the art from the following detailed description, wherein it is shown and described only in the preferred embodiments, simply by way of illustration of the best mode. As will be realized, the disclosure is capable of other and different embodiments, and its several details are capable of modifications in various obvious respects, without departing from the disclosure. Accordingly, the description is to be regarded as illustrative in nature and not as restrictive.

The disclosed method for producing flexible laminates involves applying a urethane adhesive to at least one flexible substrate as a coating and laminating or bonding the adhesive coated flexible substrate to another flexible substrate with the adhesive between the substrates to form a flexible laminate. The adhesive is then cured to form a flexible laminate material. The flexible substrate can be any type of flexible material suitable for lamination or for packaging. Plastic sheets arc typically utilized. Flexible metal sheets such as aluminum and metalized plastic sheets can also be utilized. The flexible laminates are useful as packaging materials.

Typical plastic sheets include polyethylene (PE) sheet, polypropylene (PP) sheet, PE/PP sheet, oriented PP, metalized PET, mono-axially oriented PP, nylon sheet, polyester sheet, mylar sheet, styrenic sheet, polycarbonate sheet, acrylic sheet, acetal sheet, Delrine® sheet, Lexan® sheet, Micarta® sheet, Perspec® sheet, Acrylite® sheet, PET sheets, ABS sheet, PVC sheet, PTFE sheet, HIPS sheet, EVOH sheet and PP/EVOH sheet. Sheet thickness ranges from about 2.5 µm (0.1 mil) to about 1,270 µm (50 mil), more typically from about 25 µm (1 mil) to about 508 µm (20 mil).

Other examples of flexible substrates that can be utilized include silicon oxide or aluminum oxide coated plastics such as polyester, nylon and PP.

The urethane adhesive can be any type of urethane adhesive formulation comprising at least one polyisocyanate, at least one polyfunctional curative selected from the group consisting of hydroxypolyesters, hydroxypolyethers, hydroxypolythioesters, hydroxypolyacetals, hydroxypolycarbonates, dimeric fatty alcohols, esteramides, polyetherpolyols, polyesterpolyols, polycarbonatepolyols, ethylene glycol, triethylene glycol, tetraethylene glycol, 1,2- and 1,3-propanediol, 1,4-and 1,3-butanediol, 1,6-hexanediol, 1,8-octanediol, neopentyl glycol, 1,4-bis-(hydroxymethyl)-cyclohexane, bis-(hydroxymethyl)-(tricycle-[5.2.1.0^{2.6}]-decane, 2-methyl-1,3-propanediol, 2,2,4-trimethylpentanediol, 2-ethyl-1,3-hexanediol, dipropylene glycol, polypropylene glycols, dibutylene glycol, polybutylene glycols, bisphenol A, tetra-bromobisphenol A, glycerol, trimethylolpropane, 1,2,6-hexanetriol, 1,2,4-butanetriol, pentaerythritol, quinitol, mannitol, sorbitol, methylglycoside 1,4:3,6-dianhydrohexitol and mixtures thereof; and a metallic based catalyst selected from the group consisting of dibutyltindilaurate, stannous acetate, stannic oxide, stannous octoate, dibutyltin dioctoate, tin mercaptides, stannous citrate, stannous oxylate, tetra-phenyl tin, tetra-butyl tin, tri-n-butyl tin acetate, di-alkyl tin dicarboxylates, bismuth tricarboxylates, bismuth nitrate, bismuth sulfide, basic bismuth dicarboxylates and mixtures thereof. The urethane adhesive also comprises at least one catalyst blocking agent comprising a mercapto compound, or a polyphenol with adjacent hydroxyl groups, or both. In addition, the urethane adhesive may optionally contain a solvent. The solvents can include ketones such as MEK and MIBK, aromatic solvents such as toluene and xylene, aliphatic solvents like hexane and cyclohexane, esters like ethyl acetate and other solvents like THF. The solvents are used in an amount from about 20% to about 80% by weight of the final adhesive mixture. The catalyst blocking agent provides for more control of the urethane curing process. More control of the urethane curing process leads to improved product production rates and product quality. The at least one catalyst blocking agent is a mercapto compound or a polyphenol with adjacent hydroxyl groups or a combination of both a mercapto compound and a polyphenol with adjacent hydroxyl groups.

The polyisocyanate compound is not limited and can include aromatic, aliphatic or, mixed aromatic/aliphatic isocyanates and polymeric isocyanates. Further, alcohol-modified and other modified isocyanate compositions find utility in the disclosure. Polyisocyanates preferably have from about 2-4 isocyanate groups per molecule. Suitable multi-isocyanates for use in the present disclosure include, for example, hexamethylene diisocyanate, hexamethylene diisocyanate trimer, tetramethylxylylene diisocyanate, 4,4'-toluene diisocyanate (TDI), diphenylmethane diisocyanate (MDI), polymethyl polphenyl isocyanate (Polymeric MDI or PAPI), m- and p-phenylene diisocyanates, bitolylene diisocyanate, triphenylmethane triisocyanate, tris-(4-isocyanatophenyl)thiophosphate, cyclohexane diisocyanate (CHDI), bis-(isocyanatomethyl)cyclohexane (H₆XDI), dicyclohexylmethane diisocyanate (H₁₂MDI), trimethylhexane diisocyanate, dimer acid diisocyanate (DDI), dicyclohexylmethane diisocyanate, and dimethyl derivatives thereof, trimethyl hexamethylene diisocyanate, lysine diisocyanate and its methyl ester, isophorone diisocyanate, methyl cyclohexane diisocyanate, methylenedicyclohexane diisocyanate, isophorone diisocyanate, 1,5-naphthalene diisocyanate, triphenyl methane triisocyanate, xylylene diisocyanate and methyl and hydrogenated derivatives thereof, polymethylene polyphenyl isocyanates, chlorophenylene-2,4-diisocyanate and mixtures thereof. Aromatic and aliphatic polyisocyanate dimers, trimers, oligomers, polymers (including biuret and isocyanurate derivatives) and isocyanate functional prepolymers often are available as preformed packages and such packages are suitable for use in the present disclosure. The flexible laminate adhesive may have a molar ratio of isocyanate to hydroxy of from about 0.7 to about 2.0.

The polyfunctional curative component of the urethane adhesive composition is selected from the group consisting of hydroxypolyesters, hydroxypolyethers, hydroxypolythioesters, hydroxypolyacetals, hydroxypolycarbonates, dimeric fatty alcohols, esteramides, polyetherpolyols, polyesterpolyols, polycarbonatepolyols, ethylene glycol, triethylene glycol, tetraethylene glycol, 1,2- and 1,3-propanediol, 1,4- and 1,3-butanediol, 1,6-hexanediol, 1,8-octanediol, neopentyl glycol, 1,4-bis-(hydroxymethyl)-cyclohexane, bis-(hydroxymethyl)-(tricycle-[52.1.0^{2.6}]-decane, 2-methyl-1,3-propanediol, 2,2,4-trimethylpentanediol, 2-ethyl-1,3-hexanediol, dipropylene glycol, polypropylene glycols, dibutylene glycol, polybutylene glycols, bisphenol A, tetra-bromobisphenol A, glycerol, trimethylolpropane, 1,2,6-hexanetriol, 1,2,4-butanetriol, pentaerythritol, quinitol, mannitol, sorbitol, methylglycoside 1,4:3,6-dianhydrohexitol and mixtures thereof. The flexible laminate adhesive may have a molar ratio of isocyanate to hydroxyl of from about 0.7 to about 2.0.

The metallic based catalyst component of the urethane adhesive composition is selected from dibutyltindilaurate, stannous acetate, stannic oxide, stannous octoate, dibutyltin dioctoate, tin mercaptides, stannous citrate, stannous oxylate, tetra-phenyl tin, tetra-butyl tin, tri-n-butyl tin acetate, di-alkyl tin dicarboxylates, bismuth tricarboxylates, bismuth nitrate, bismuth sulfide, basic bismuth dicarboxylates, and mixtures thereof. Typically, the catalyst concentration ranges from about 0.005 to about 0.5 weight % based on the total amount of adhesive.

The at least one blocking agent component of the urethane adhesive composition includes compounds that can reversibly block the catalyst activity of the metallic based catalyst component. Typically, the catalyst blocking agent is a mercapto compound or a polyphenol with adjacent hydroxyl groups or a combination of both a mercapto compound and a polyphenol with adjacent hydroxyl groups.

The mercapto compound is not limited and can include any mercapto compound capable of reversibly inhibiting the catalytic activity of the metallic based catalyst. Typically, the mercapto compound is selected from trimethylol propane tri-(3-mercapto propionate), pentaerythritol tetra-(3-mercapto propionate), glycol di-(3-mercapto propionate), glycol dimercapto acetate, trimethylol propane trithioglycolate, mercapto diethyl ether, ethane dithiol, thiolactic acid, mercapto propionic acid and esters thereof, thiophenol, thio acetic acid, 2-mercapto ethanol, 1,4-butanedithiol, 2,3-dimercapto propanol, toluene-3,4-dithiol, alpha,alpha'-dimercapto-para-xylene, thiosalicylic acid, mercapto acetic acid, dodecane dithiol, didodecane dithiol, di-thio phenol, di-para-chlorothiophenol, dimercapto benzothiazole, 3,4-dimercapto toluene, allyl mercaptan, benzyl mercaptan, 1,6-hexane dithiol, I-octane thiol, para-thiocresol, 2,3,5,6-tetrafluorothiophenol, cyclohexyl mercaptan, methylthioglycolate, various mercapto pyridines, dithioerythritol, 6-ethoxy-2-mercaptobenzothiazole, d-limonene dimercaptan γ-mercapto silane, and mixtures thereof. Typically, the molar ratio of mercapto groups in the mercaptan to the metal in the metal catalyst ranges from about 2:1 to about 500:1.

The polyphenol with adjacent hydroxyl groups can be any polyphenol compound with adjacent hydroxyl groups, Typical examples include catechol (1,2-dihdroxybenzene), pyrogallol, 3-methoxy catechol, and other catechol derivatives including catechol derivatives with the structure given in formula I

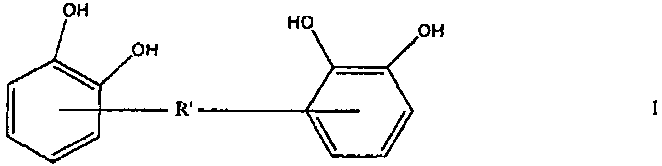

where R' is a divalent organic group. Typically, the molar ratio of hydroxyl groups from the polyphenol to the metal in the metal catalyst ranges from about 2: 1 to about 500:1.

When the urethane adhesive composition contains the polyphenol with adjacent hydroxyl groups the adhesive composition may optionally contain a tertiary amine containing substituents such as alkyl, alkanol, aryl, cycloaliphatic, and mixtures thereof Additionally, heterocyclic tertiary amines may be suitable for use in the invention also. Representative tertiary amines include, for example, triethylamine, dimethylethylamine, tetramethylethylenediamine, trimethylamine, tributylamine, dimethylbenzylamine, dimethylcyclohexylamine, dimethylethanolamine, diethylethanolamine, triethanolamine, pyridine, 4-phenylpropylpyridine, 2,4,6-collidine, quinoline, tripropylamine, isoquinoline, N-ethylmorpholine, triethylenediamine, and the like and mixtures thereof. Additionally, it is conceivable to use amine oxides and quaternary ammonium amines. A myriad of proprietary tertiary amine activators currently are available and should also function in the process.

The blocking effect of the catalyst blocking agent can be reversed by heating the flexible laminate. The blocking effect of the mercaptan or polyphenol is eliminated by reaction of mercaptan or polyphenol with isocyanate. With heating, the urethane adhesive cures at a more controlled rate by quickly reactivating the catalyst. With the catalyst reactivated, the polyisocyanate and the polyfunctional curative react to form the cured urethane adhesive and form the finished flexible packaging. Typically, the flexible laminate is heated from about 25°C to about 100°C, more typically from about 25°C to about 60°C and even more typically from about 25°C to about 50°C.

When a mercapto compound blocking agent is utilized, the blocking effect of the catalyst can also be reversed by including an olefinic compound in the urethane adhesive composition and exposing the flexible laminate to actinic radiation such as UV radiation or e-beam radiation. The radiation causes the mercapto compound to react with the olefinic compound and this eliminates the blocking effect of the mercapto compound thus reactivating the catalyst. With the catalyst reactivated, the urethane in the flexible laminate cures forming the finished flexible packaging.

The olefinic compound is not limited and can include any olefin usable in a urethane adhesive composition, Non-limiting examples include diallyl phthalate, acrylic acid, methacrylic acid, alkyl acrylate, alkyl methacrylate, acrylamide and mixtures thereof. The molar ratio of the olefinic groups in the olefin to the mercapto groups in the mercaptan ranges from about 0.5:1 to about 2:1.

The following examples are for illustrative purposes only and are not intended to limit the scope of the claims.

In general, the flexible laminate is produced by compounding the components of the urethane adhesive with a mixing device such as a standard mixing blade or a static mixer. Typically, the compounded urethane adhesive is applied to a laminating head and the adhesive is transferred to a flexible substrate. The laminating head is typically set to a temperature from about 25°C to about 50°C, more typically from about 25°C to about 45°C The coat thickness of the adhesive applied onto the substrate is typically from about 0.25 µm (0.01 mils) to about 6.35 µm (0.250 mils), more typically from about 0.75 µm (0.03 mils) to about 4.45 µm (0.175 mils) and even more typically from about 1.27 µm (0.05 mils) to about 3.81 µm (0.150 mils).

After the adhesive is applied to the first flexible substrate (primary film), the first flexible substrate is laminated or bonded to a second flexible substrate (secondary film) with the adhesive layer between the primary and secondary film. The flexible laminate has the layered structure primary film/adhesive/secondary film. This process can be repeated to form a multiple layer laminate. For example, the secondary layer of the flexible laminate about can have urethane adhesive applied to its surface and then a tertiary film can be married to the flexible laminate to form the laminated structure primary film/adhesive/secondary film/adhesive/tertiary film. This process can be repeated to achieve any desired number of layers in any desired order of flexible substrates (films).

Once the at least two flexible substrates are laminated or bonded together, to form a flexible laminate, the laminate is passed through a nip between two rolls under pressure. One or both of the rolls may be heated. The nip pressure typically is about 17.51 N/m (0.1 pli) to about 17,512.70 N/m (100 pli). One or both of the rolls may be heated to about 25°C to about 100°C, more typically from about 25°C to about 60°C and even more typically from about 25°C to about 50°C.

For multiple layer laminates (more than 2 flexible substrates) the laminate can be passed through the nip for each succeeding layer of adhesive and flexible substrate or the entire multiple flexible laminate can be formed first then passed through the nip. The urethane adhesive is then allowed to cure with time or by heating or by exposure to radiation depending upon the urethane adhesive formulation and the type of flexible packaging produced. The radiation can be applied before or after the nipping process. For example, a urethane adhesive containing a mercaptan or polyphenol with adjacent hydroxyl groups can cure over time because the blocking effect of the mercaptan or polyphenol compounds is reduced as the polyisocyanate in the adhesive formulation reacts with them which in turn deblocks the catalyst which then catalyzes the reaction between the polyisocyanate and polyfunctional curative. The process is accelerated by heating. Alternatively, for formulations containing a mercaptan and an olefinic compound, exposure to radiation causes the mercaptan and olefinic compound to react thus eliminating the blocking effect of the mercaptan. The de-blocked catalyst can then quickly cure the urethane adhesive.

If heat is applied to accelerate the urethane adhesive cure rate the heat may be applied by heating one or both of the nip rolls. If radiation is applied to accelerate the urethane cure rate, the urethane adhesive coated on the flexible substrate is subjected to radiation before or after the nipping process. For example, if at least one of the two flexible substrates is transparent to radiation, the adhesive may be exposed to radiation after the nipping process. In either case, some heat may be applied to facilitate adhesive wet out. The following non-limiting examples illustrate some of the embodiments of the disclosure.

Four flexible laminate examples were prepared using the general procedures described above. Processing conditions for the laminations and the flexible substrates (films) used are given below in Table 1. The urethane adhesive formulations are given in Table 2.

**Table 1 -- Process conditions for producing the flexible laminated packaging.**

| **Process Parameters** | |
|---|---|
| **Application roll temperature** | 36°C |
| **NIP roll temperature** | 45°C |
| **Line speed** | 0.2032 m/s (40 fpm) |
| **Adhesive coat thickness** | 2.79 µm (0.11 mils) |
| **Flexible substrates (films)** | |
| **Primary film** | 48 g PET |
| **Secondary film** | 50.8 µm (2.0 mil) LDPE |

**Table 2 - Urethane Adhesive Formulations**

| | 1 | 2 | 3 | 4 | 5 | 6 | 7 |
|---|---|---|---|---|---|---|---|
| **Urethane Formulation** | | | | | | | |
| | | | | | | | |
| **Polyisocyanate, wt%** | | | | | | | |
| **Hexamethylene Diisocyanate Trimer** | 100 | 100 | 100 | 100 | 100 | 96.0 | 50 |
| **Catechol** | 0 | 0 | 0 | 0 | 0 | 2.24 | 0 |
| **Dibutyl Tin Dilaurate (Catalyst)** | 0 | 0 | 0 | 0 | 0 | 0.07 | 0 |
| **MEK** | 0 | 0 | 0 | 0 | 0 | 2.02 | 50 |
| | | | | | | | |

| **Polyfunctional Curative, wt%** | | | | | | | |
|---|---|---|---|---|---|---|---|
| **Polypropylene glycol** | 57.75 | 57.75 | 57.75 | 57.75 | 57.75 | 57.75 | 28.9 |
| **Castor Oil** | 37.35 | 37.22 | 36.9 | 35.4 | 35.40 | 35.4 | 18.5 |
| **Polypropylene Glycol Trimer** | 4.9 | 4.9 | 4.9 | 4.9 | 4.9 | 4.9 | 2.46 |
| **Dibutyl Tin Dilaurate (Catalyst)** | 0 | 0.04 | 0.04 | 0.04 | 0 | 0 | 0.02 |
| **CosCAT T-83® (Bismuth catalyst)** | 0 | 0 | 0 | 0 | 0.04 | 0 | 0 |
| **Mercapto Silane (Blocking Agent)** | 0 | 0 | 0.32 | 0.32 | 0.32 | 0 | 0.16 |
| **Diallyl Phthalate (Olefinic Compound)** | 0 | 0 | 0 | 1.50 | 0 | 0 | 0 |
| **Triethyl amine** | 0 | 0 | 0 | 0 | 0 | 0.10 | 0 |
| **MEK** | 0 | 0 | 0 | 0 | 0 | 0 | 50 |

Flexible laminates (two films) were all prepared similarly with the conditions given above. Example 4 was exposed to radiation prior to passing through the nip. A Nordmeccanica® Super Simplex SL Laminator was used to laminate the films. The two parts of the urethane composition (polyisocyanate and polyfunctional curative) were mixed in the ratio 1:1.9 using meter-mix equipment before coating and lamination. Example 1 contains no catalyst, example 2 contains a tin catalyst and no blocking agent, example 3 contains a tin catalyst and a mercapan blocking agent, example 4 contains a tin catalyst, a mercaptan blocking agent and an olefinic compound, example 5 contains a bismuth catalyst and a mercaptan blocking agent, example 6 contains a tin catalyst and a polyphenol blocking agent and example 7 contains solvent with a tin catalyst and a mercaptan blocking agent. The seven examples with the different urethane compositions were then compared to a commercially available urethane composition (Rohm & Haas C33/1390®). The useable pot life time and the time to urethane adhesive cure in forming the finished flexible laminate was determined for each example. The results are given in Table 3.

**Table 3 - Usable pot life time and time to adhesive cure for the urethane adhesive compositions used in the flexible laminate.**

| | Pot Life Time, Minutes (@ 35 °C) | Time to Cure, Days |
|---|---|---|
| comparative Example 1 Adhesive | > 120 | 7 |
| comparative Example 2 Adhesive | 25 | 1 |
| Example 3 Adhesive | 80 | 1 |
| Example 4 Adhesive | 80 | 1 |
| Example 5 Adhesive | 70 (@ 40 °C, >120 @ 25 °C | 1 |
| Example 8 Adhesive | 80 (@ 40 °C) | 1 |
| Example 7 Adhesive | >120 | 1 |
| Rohm & Haas C33 / 1390® | 80 | 7 |

Inspection of Table 3 shows that without catalyst (example 1) very long pot life times are achieved; however, the adhesive takes 7 days to cure within the laminate. This long cure time adversely affects flexible laminate production. The commercial adhesive (Rohm & Haas C33 /1390®) shows a good pot life of about 80 minutes but still takes about 7 days to cure. With catalyst (example 2) cure times can be reduced to I day but pot life is shortened to an unacceptable time of about 25 minutes. With catalyst and blocking agent (example 3) a good balance of pot life (80 minutes) and cure time (1 day) is achieved. This balance of pot life and cure times leads to greatly improved productivity. Use of an olefinic compound with a catalyst and blocking agent (mercaptan) (example 4) leads to good pot life (80 minutes) and a short cure time (1 day).

Use of a bismuth catalyst (example 5) and mercapto blocking agent also provides for long pot life and short cure time. In addition, use of a polyphenol blocking agent (example 6) provides both long pot life and short cure time. Finally, use of a solvent (example 7) in combination with a mercapto blocking agent provides a very long pot life (> 120 minutes at 35°C) and short cure time (1 day).

Overall, the disclosed method of producing flexible laminates provides for improved productivity by allowing for good adhesive pot life times while considerably shortening the cure time of the adhesive in the flexible laminate,

The term "comprising" (and its grammatical variations) as used herein is used in the inclusive sense of "having" or "including" and not in the exclusive sense of "consisting only of". The terms "a" and "the" as used herein are understood to encompass the plural as well as the singular.

The foregoing description illustrates and describes the present disclosure. Additionally, the disclosure shows and describes only the preferred embodiments of the disclosure, but, as mentioned above, it is to be understood that it is capable of changes or modifications within the scope of the concept as expressed herein, commensurate with the above teachings and/or skill or knowledge of the relevant art. The embodiments described hereinabove are further intended to explain best modes known of practicing the invention and to enable others skilled in the art to utilize the disclosure in such, or other, embodiments and with the various modification required by the particular applications or uses disclosed herein. Accordingly, the description is not intended to limit the invention to the form disclosed herein. Also, it is intended that the appended claims be construed to include alternative embodiments.

### Legend of handwritten amendments:

[V] a method for producing a flexible laminate packaging comprising:
   (a) applying a urethane adhesive to at least one of at least two flexible substrates wherein the at least two flexible substrates may be the same or different materials independently selected from the group consisting of plastic sheets, metal sheets and metalized plastic sheets;
   (b) laminating the at least two flexible substrates with the urethane adhesive between the substrates to form a flexible laminate and
   (c) allowing the urethane adhesive to cure forming a flexible laminate,
   wherein the urethane adhesive comprises
   - at least one polyisocyanate;
   - at least one polyfunctional curative selected from the group consisting of hydroxypolyesters, hydroxypolyethers, hydroxypolythioesters, hydroxypolyacetals, hydroxypolycarbonates, dimeric fatty alcohols, esteramides, polyetherpolyols, polyesterpolyols, polycarbonatepolyols, ethylene glycol, triethylene glycol, tetraethylene glycol, 1,2- and 1,3-propanediol, 1,4- and 1,3-butanediol, 1,6-hexanediol, 1,8-octanediol, neopentyl glycol, 1,4-bis-(hydroxymethyl)-cyclohexane, bis-(hydroxymethyl)-(tricycle-[5.2.1.0^{2.6}]-decane, 2-methyl-1,3-propanediol, 2,2,4-trimethylpentanediol, 2-ethyl-1,3-hexanediol, dipropylene glycol, polypropylene glycols, dibutylene glycol, polybutylene glycols, bisphenol A, tetra-bromobisphenol A, glycerol, trimethylolpropane, 1,2,6-hexanetriol, 1,2,4-butanetriol, pentaerythritol, quinitol, mannitol, sorbitol, methylglycoside 1,4:3,6-dianhydrohexitol and mixtures thereof;
   - a metallic based catalyst selected from the group consisting of dibutyltindilaurate, stannous acetate, stannic oxide, stannous octoate, dibutyltin dioctoate, tin mercaptides, stannous citrate, stannous oxylate, tetra-phenyl tin, tetra-butyl tin, tri-n-butyl tin acetate, di-alkyl tin dicarboxylates, bismuth tricarboxylates, bismuth nitrate, bismuth sulfide, basic bismuth dicarboxylates and mixtures thereof; and
   - at least one catalyst blocking agent comprising a mercapto compound, or a polyphenol with adjacent hydroxyl groups, or both.
[W] Patent DE 19840318 A1 (US 6548615 B1) relates to reactive binding agents with an extended pot life which consist of isocyanate-containing compounds and polyols, characterized in that they also contain a catalyst combination consisting of an organic tin or bismuth compound, a thiol group-containing compound or a polyphenol which is able to react with an isocyanate in the presence of an activator, and a hydrolyzable halogen compound. WO 9508579 A1 discloses a polyol/polyisocyanate adhesive system having an isocyanate component and a catalyzed component which form a heat-cured composition when admixed and heated above a threshold temperature. An object of U.S. Patent No. 6482523 B1 is the provision of an adhesive for lamination comprising a resin having a specific dynamic wettability and a polyisocyanate curing agent. Tin or bismuth complex catalysts and trigger cure of coatings therewith are known from patent GB 2188327 A. Thereby, the catalyst is effective for the reaction of a hydroxyl compound and an isocyanate.
[X] selected from the group consisting of hydroxypolyesters, hydroxypolyethers, hydroxypolythioesters, hydroxypolyacetals, hydroxypolycarbonates, dimeric fatty alcohols, esteramides, polyetherpolyols, polyesterpolyols, polycarbonatepolyols, ethylene glycol, triethylene glycol, tetraethylene glycol, 1,2- and 1,3-propanediol, 1,4-and 1,3-butanediol, 1,6-hexanediol, 1,8-octanediol, neopentyl glycol, 1,4-bis-(hydroxymethyl)-cyclohexane, bis-(hydroxymethyl)-(tricycle-[5.2.1.0^{2.6}]-decane, 2-methyl-1,3-propanediol, 2,2,4-trimethylpentanediol, 2-ethyl-1,3-hexanediol, dipropylene glycol, polypropylene glycols, dibutylene glycol, polybutylene glycols, bisphenol A, tetra-bromobisphenol A, glycerol, trimethylolpropane, 1,2,6-hexanetriol, 1,2,4-butanetriol, pentaerythritol, quinitol, mannitol, sorbitol, methylglycoside 1,4:3,6-dianhydrohexitol and mixtures thereof;
[Y] selected from the group consisting of dibutyltindilaurate, stannous acetate, stannic oxide, stannous octoate, dibutyltin dioctoate, tin mercaptides, stannous citrate, stannous oxylate, tetra-phenyl tin, tetra-butyl tin, tri-n-butyl tin acetate, di-alkyl tin dicarboxylates, bismuth tricarboxylates, bismuth nitrate, bismuth sulfide, basic bismuth dicarboxylates and mixtures thereof;
[Z] comprising a mercapto compound, or a polyphenol with adjacent hydroxyl groups, or both.

## Claims

1. A method for producing a flexible laminate packaging comprising:
(a) applying a urethane adhesive to at least one of at least two flexible substrates wherein the at least two flexible substrates may be the same or different materials independently selected from the group consisting of plastic sheets, metal sheets and metalized plastic sheets;
(b) laminating the at least two flexible substrates with the urethane adhesive between the substrates to form a flexible laminate and
(c) allowing the urethane adhesive to cure forming a flexible laminate,
wherein the urethane adhesive comprises
- at least one polyisocyanate;
- at least one polyfunctional curative selected from the group consisting of hydroxypolyesters, hydroxypolyethers, hydroxypolythioesters, hydroxypolyacetals, hydroxypolycarbonates, dimeric fatty alcohols, esteramides, polyetherpolyols, polyesterpolyols, polycarbonatepolyols, ethylene glycol, triethylene glycol, tetraethylene glycol, 1,2- and 1,3-propanediol, 1,4- and 1,3-butanediol, 1,6-hexanediol, 1,8-octanediol, neopentyl glycol, 1,4-bis-(hydroxymethyl)-cyclohexane, bis-(hydroxymethyl)-(tricycle-[5.2.1.0^{2.6}]-decane, 2-methyl-1,3-propanediol, 2,2,4-trimethylpentanediol, 2-ethyl-1,3-hexanediol, dipropylene glycol, polypropylene glycols, dibutylene glycol, polybutylene glycols, bisphenol A, tetra-bromobisphenol A, glycerol, trimethylolpropane, 1,2,6-hexanetriol, 1,2,4-butanetriol, pentaerythritol, quinitol, mannitol, sorbitol, methylglycoside 1,4:3,6-dianhydrohexitol and mixtures thereof;
- a metallic based catalyst selected from the group consisting of dibutyltindilaurate, stannous acetate, stannic oxide, stannous octoate, dibutyltin dioctoate, tin mercaptides, stannous citrate, stannous oxylate, tetra-phenyl tin, tetra-butyl tin, tri-n-butyl tin acetate, di-alkyl tin dicarboxylates, bismuth tricarboxylates, bismuth nitrate, bismuth sulfide, basic bismuth dicarboxylates and mixtures thereof; and
- at least one catalyst blocking agent comprising a mercapto compound, or a polyphenol with adjacent hydroxyl groups, or both.

2. The method according to claim 1, wherein the flexible laminate is heated to accelerate the curing of the urethane adhesive.

3. The method according to claim 1, wherein the catalyst blocking agent comprises a mercapto compound or a mixture of a mercapto compound and a polyphenol with adjacent hydroxyl groups and wherein the urethane adhesive further comprises an olefinic compound, wherein optionally, the olefinic compound is selected from the group consisting of diallyl phthalate, acrylic acid, methacrylic acid alkyl acrylate, alkyl methacrylate, acrylamide and mixtures thereof.

4. The method according to claim 3, wherein the flexible laminate is exposed to actinic radiation or e-beam radiation to accelerate the curing of the urethane adhesive.

5. The method according to claim 1, wherein the at least two flexible substrates are selected from the group consisting of polyethylene (PE) sheet, polypropylene (PP) sheet, PE/PP sheet oriented PP, metalized PET, mono-axially oriented PP nylon sheet, polyester sheet, mylar sheet, styrenic sheet, polycarbonate sheet, acrylic sheet, acetal sheet, PET sheets, ABS sheet, PVC sheet, PTFE sheet, HIPS sheet, EVOH sheet and PP/EVOH sheet.

6. The method according to claim 1, wherein the at least one polyisocyanate is selected from the group consisting hexamethylene diisocyanate, hexamethylene diisocyanate trimer, tetramethylxylylene diisocyanate, 4,4'-toluene diisocyanate (TDI), diphenylmethane diisocyanate (MDI), polymethyl polphenyl isocyanate (Polymeric MDI or PAPI), m- and p-phenylene diisocyanates, bitolyene diisocyanate, triphenylmethane triisocyanate, tris-(4-isocyanatophenyl)thiophosphate, cyclohexane diisocyanate (CHDI), bis-(Isocyanatomethyl)cyclohexane (H₆XDI), dicyclohexylmethane diisocyanate (H₁₂MDI), trimethylhexane diisocyanate, dimer acid diisocyanate (DDI), dicyclohexylmethane diisocyanate, and dimethyl derivatives thereof, trimethyl hexamethylene diisocyanate, lysine diisocyanate and its methyl ester, isophorone diisocyanate, methyl cyclohexane diisocyanate, methylenedicyclohexane diisocyanate, isophorone diisocyanate, 1,5-naphthalene diisocyanate, triphenyl methane triisocyanate, xylylene diisocyanate and methyl and hydrogenated derivatives thereof, polymethylene polyphenyl isocyanates, chlorophenylene-2,4-diisocyanate and mixtures thereof.

7. The method according to claim 1, wherein when the urethane adhesive comprises a mercapto compound as a catalyst blocking agent, the mercapto compound is selected from the group consisting of trimethylol propane tri-(3- mercapto propionate).
pentaerythritol tetra-(3-mercapto propionate), glycol di-(3-mercapto propionate), glycol dimercapto acetate, trimethylol propane trithioglycolate, mercapto diethyl ether, ethane dithiol, thiolactic acid, mercapto propionic acid and esters thereof, thiophenal, thio acetic acid, 2-mercapto ethanol, 1,4-butanedithiol, 2,3-dimercapto propanol, toluene-3,4-dithiol, alpha,alpha'-dimercapto-para-xylene, thiosalicylic acid, mercapto acetic acid, dodecane dithiol, didodecane dithiol, di-thio phenol, di-para-chlorothiophenol, dimercapto benzothiazole, 3,4-dimercapto toluene, allyl mercaptan, benzyl mercaptan, 1,6-hexane dithiol, 1-octane thiol, para-thiocresol, 2,3.5,6-tetrafluorothiophenol, cyclohexyl mercaptan, methylthioglycolate, various mercapto pyridines, dithioerythritol, 6-ethoxy-2-morcaptobenzothiazole, d-limonene dimercaptan [gamma]-mercapto silane, and mixtures thereof: or wherein when the urethane adhesive comprises a polyphenol with adjacent hydroxy groups as a catalyst blocking agent, the polyphenol with adjacent hydroxyl groups is selected from the group consisting of catechol, pyrogallol, 3-methoxy catechol, a catechol derivative as shown In formula I 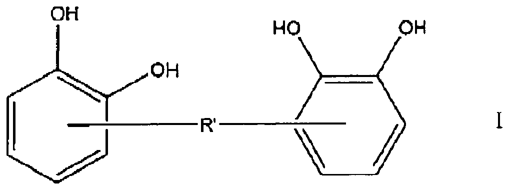 where R' is a divalent organic group and mixtures thereof.

8. The method according to claim 1, wherein the at least two flexible substrates with the urethane adhesive between the substrates are married by passing through a nip point between two rolls where pressure is applied and wherein one or both of the two rolls are optionally heated.

9. The method according to claim 4, wherein the at least two flexible substrates with the urethane adhesive between the substrates are married by passing through a nip point between two rolls where pressure is applied, wherein one or both of the two rolls are optionally heated and wherein the at least two flexible substrates with the urethane adhesive between the substrates is exposed to actinic radiation prior to passing through the nip point.

10. The method according to claim 1, wherein at least one of the at least two flexible substrates contains print, and, optionally, wherein the print is printed by a least one
printing method selected from the group consisting of a water-based method, a solvent-based method and radiation-based method.

11. The method according to claim 1, wherein the urethane adhesive is applied to at least one smooth roll laminating head and then transferred the at least one of the at least two flexible substrates.

12. The method according to claim 1, wherein the urethane adhesive further comprises a solvent, wherein optionally, the solvent is selected from the group consisting of a ketone, MEK, MIBK, an aromatic solvent, toluene, xylene, an aliphatic solvent, hexane, cyclohexane, an ester, ethyl acetate, THF and mixtures thereof.

13. The method according to claim 1, wherein the urethane adhesive further comprises a tertiary amine, wherein optionally, the tertiary amine is triethylamine, dimethylethylamine, tetramethylethylenediamine, trimethylamine, tributylamine, dimethylbenzylamine, dimethylcyclohexylamine, dimethylethanolamine, diethylethanolamine, triethanolamine, pyridine, 4-phenylpropylpyridine, 2,4,6-collidine, quinoline, tripropylamine, isoquinotine. N-ethylmorpholine, triethylenediamine and mixtures thereof.

14. The method according to claim 1, wherein the flexible laminate is plastic coated with silicon oxide or aluminum oxide.

15. A flexible laminate packaging material manufactured by the method according to claim 1.

## Patentansprüche

1. Ein Verfahren zum Herstellen einer biegsamen Verbundverpackung umfassend die Schritte:
(a) Aufbringen eines Urethanklebstoffs auf wenigstens eins von wenigstens zwei biegsamen Substraten, wobei die wenigstens zwei biegsamen Substrate gleich oder verschieden sein können unabhängig voneinander ausgewählt aus der Gruppe bestehend aus Kunststofffolien, Metallfolien und metallisierten Kunststofffolien;
(b) Kaschieren der wenigstens zwei biegsamen Substrate mit dem Urethanklebstoff zwischen den Substraten um einen biegsamen Verbund zu bilden, und
(c) den Urethanklebstoff aushärten lassen, um einen biegsamen Verbund zu bilden,
wobei der Urethanklebstoff
- wenigstens ein Polyisocyanat;
- wenigstens einen polyfunktionellen Härter ausgewählt aus der Gruppe bestehend aus Hydroxypolyestern, Hydroxypolyethern, Hydroxypolythioestern, Hydroxypolyacetalen, Hydroxypolycarbonaten, dimere Fettalkoholen, Esteramiden, Polyetherpolyolen, Polyesterpolyolen, Polycarbonatpolyolen, Ethylenglykol, Triethylenglykol, Tetraethylenglykol, 1,2- und 1,3-Propandiol, 1,4- und 1,3-Butandiol, 1,6-Hexandiol, 1,8-Octandiol, Neopentylglykol, 1,4-Bis-(hydroxymethyl)-cyclohexan, Bis-(hydroxymethyl)-(tricyclo-[5.2.1.0^{2.6}]-decan, 2-Methyl-1,3-propandiol, 2,2,4-Trimethylpentandiol, 2-Ethyl-1,3-Hexandiol, Dipropylenglykol, Polypropylenglykolen, Dibutylenglykol, Polybutylenglykolen, Bisphenol A, Tetra-Brombisphenol A, Glycerin, Trimethylolpropan, 1,2,6-Hexantriol, 1,2,4-Butantriol, Pentaerythritol, Quinitol, Mannitol, Sorbitol, Methylglykosid 1,4.3,6-Dianhydrohexitol und Mischungen davon;
- einen metallbasierten Katalysator ausgewählt aus der Gruppe bestehend aus Dibutylzinndilaurat, Zinnacetat, Zinnoxid, Zinnoctoat, Dibutylzinndioctoat, Zinnmerkaptide, Zinnzitrat, Zinnoxalat, Zinntetraphenyl, Zinntetrabutyl, Tri-n-butylzinnacetat, Dialkylzinndicarboxylate, Bismuttricarboxylate, Bismutnitrat, Bismutsulfid, basische Bismutdicarboxylate und Mischungen davon; und
- wenigstens ein Katalysatorblockierungsmittel umfassend eine Verbindung mit Merkaptogruppen oder ein Polyphenol mit benachbarten Hydroxylgruppen, oder beide,
umfasst.

2. Das Verfahren gemäß Anspruch 1, wobei der biegsame Verbund erhitzt wird, um das Aushärten des Urethanklebstoffs zu beschleunigen.

3. Das Verfahren gemäß Anspruch 1, wobei das Katalysatorblockierungsmittel eine Verbindung mit Merkaptogruppen oder eine. Mischung einer Verbindung mit Merkaptogruppen und eines Polyphenols mit benachbarten Hydroxylgruppen umfasst und wobei der Urethanklebstoff zusätzlich olefinische Verbindungen umfasst, wobei gegebenenfalls die olefinische Verbindung ausgewählt wird aus der Gruppe bestehend aus Phtalsäurediallylester, Acrylsäure, Methacrylsäure-Alkylacryclat, Alkylmethacrylat, Acrylamid und Mischungen davon.

4. Das Verfahren gemäß Anspruch 3, wobei der biegsame Verbund aktinischer Strahlung oder Elektronenstrahlung ausgesetzt wird, um das Aushärten des Urethanklebstoffs zu beschleunigen.

5. Das Verfahren gemäß Anspruch 1, wobei die wenigstens zwei biegsamen Substrate ausgewählt werden aus der Gruppe bestehend aus Polyethylen (PE)-Folien, Polypropylen (PP)-Folien, orientierte PP PE/PP-Folien, metallisiertes PET, monoaxial orientierte PP Nylon-Folien, Polyester-Folien, Stabilfolien, Styrol-Folien, Polycarbonat-Folien, Acryl-Folien, Acetat-Folien, PET-Folien, ABS-Folien, PVC-Folien, PTFE-Folien, HIPS-Folien, EVOH-Folien und PP/EVOH-Folien.

6. Das Verfahren gemäß Anspruch 1, wobei das wenigstens eine Polyisocyanat ausgewählt wird aus der Gruppe bestehend aus Hexamethylendiisocyanat, Hexamethylendiisocyanat-Trimer, Tetramethylxylylendiisocyanat, 4,4'-Toluoldiisocyanat (TDI), Diphenylmethandiisocyanat (MDI), Polymethylpolphenylisocyanat (polymeres MDI oder PAPI), m- und p-Phenylendiisocyanate, Bitolylendiisocyanat, Triphenylmethantriisocyanat, Tris-(4-isocyanatophenyl)thiophosphat, Cyclohexandiisocyanat (CHDI), Bis-(isocyanatomethyl)cyclohexan (H₆XDI), Dicyclohexylmethandiisocyanat (H₁₂MDI), Trimethylhexandiisocyanat, Dimersäurediisocyanat (DDI), Dicyclohexylmethandiisocyanate, und Dimethylderivate davon, Trimethylhexamethylendiisocyanat, Lysindiisocyanat und seine Methylester, Isophorondiisocyanat, Methylcyclohexandiisocyanat, Methylendicyclohexandiisocyanat, 1,5-Naphthalendiisocyanat, Triphenylmethantriisocyanat, Xylylendiisocyanat und Methyl- und hydrogenierte Derivate davon, Polymethylenpolyphenylisocyanate, Chlorophenylen-2,4-diisocyanat und Mischungen davon.

7. Das Verfahren gemäß Anspruch 1, wobei, sofern der Urethanklebstoff eine Verbindung mit Merkaptogruppen als Katalysatorblockierungsmittel umfasst, die Verbindung mit Merkaptogruppen ausgewählt wird aus der Gruppe bestehend aus Trimethylolpropan-tris-(3-merkaptopropionat), Pentaerythritol-tetrakis-(3-mMerkaptopropionat), Glykoldi-(3-merkaptopropionat), Glykoldimerkaptoacetat, Trimethylolpropantrithioglykolat, Merkaptodiethylether, Ethandithiol, Thiomilchsäure, Merkaptopropionsäure und Ester davon, Thiophenol, Thioessigsäure, 2-Merkaptoethanol, 1,4-Butandithiol, 2,3-Dimerkaptopropanol, Toluol-3,4-dithiol, alpha,alpha'-Dimerkapto-para-xylol, Thiosalicylsäure, Merkaptoessigsäure, Dodecandithiol, Didodecandithiol, Di-thiophenol, Di-para-chlorthiophenol, Dimerkaptobenzothiazol, 3,4-Dimerkaptotoluol, Allylmerkaptan, Benzylmerkaptan, 1,6-Hexanedithiol, 1-Octanthiol, para-Thiokresol, 2,3,5,6-Tetrafluorthiophenol, Cyclohexylmerkaptan, Methylthioglykolat, verschiedene Merkaptopyridine, Dithioerythritol, 6-Ethoxy-2-merkaptobenzothiazol, d-Limonendimerkaptan [gamma]-merkaptosilan, und Mischungen davon; oder wobei sofern der Urethanklebstoff ein Polyphenol mit benachbarten Hydroxygruppen als Katalysatorblockierungsmittel umfasst, das Polyphenol mit benachbarten Hydroxylgruppen ausgewählt wird aus der Gruppe bestehend aus Catechinsäure, Pyrogallussäure, 3-Methoxycatechinsäure, ein Catechinsäurederivat wie in Formel I gezeigt, 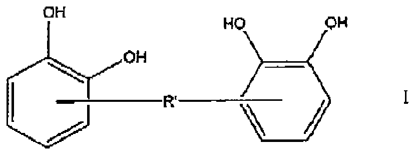 worin R' eine divalente organische Gruppe ist, und Mischungen davon.

8. Das Verfahren gemäß Anspruch 1, wobei die wenigstens zwei biegsamen Substrate mit dem Urethanklebstoff zwischen den Substraten zusammengebracht werden, indem sie durch einen Klemmpunkt zwischen zwei Walzen geführt werden, wo Druck angewandt wird und wobei eine oder beide der Walzen gegebenenfalls erhitzt werden.

9. Das Verfahren gemäß Anspruch 4, wobei die wenigstens zwei biegsamen Substrate mit dem Urethanklebstoff zwischen den Substraten zusammengebracht werden, indem diese durch einen Klemmpunkt zwischen zwei Walzen geführt werden, wo Druck angewandt wird, wobei eine oder beide der Walzen gegebenenfalls erhitzt werden und wobei die wenigstens zwei biegsamen Substrate mit dem Urethanklebstoff zwischen den Substraten vor dem Durchlaufen des Klemmpunktes aktinischer Strahlung ausgesetzt werden.

10. Das Verfahren gemäß Anspruch 1, wobei wenigstens eins der wenigstens zwei biegsamen Substrate einen Druck enthält und wobei gegebenenfalls der Druck gedruckt wird mit wenigstens einem Druckverfahren ausgewählt aus der Gruppe bestehend aus wasserbasierten Verfahren, lösungsmittelbasierten Verfahren und strahlungsbasierten Verfahren.

11. Das Verfahren gemäß Anspruch 1, wobei der Urethanklebstoff auf den glatten Kopf einer Kaschierwalze aufgebracht wird und dann auf wenigstens eine der wenigstens zwei biegsamen Substrate übertragen wird.

12. Das Verfahren gemäß Anspruch 1, wobei der Urethanklebstoff zusätzlich ein Lösungsmittel umfasst, wobei gegebenenfalls das Lösungsmittel ausgewählt wird aus der Gruppe bestehend aus einem Keton, MEK, MIBK, einem aromatischen Lösungsmittel, Toluol, Xylol, einem aliphatischen Lösungsmittel, Hexan, Cyclohexan, einem Ester, Ethylacetat, THF und Mischungen davon.

13. Das Verfahren gemäß Anspruch 1, wobei der Urethanklebstoff zusätzlich ein tertiäres Amin umfasst, wobei gegebenenfalls das tertiäre Amin Triethylamin, Dimethylethylamin, Tetramethylethylendiamine, Trimethylamin, Tributylamin, Dimethylbenzylamin, Dimethylcyclohexylamin, Dimethylethanolamin, Diethylethanolamin, Triethanolamin, Pyridin, 4-Phenylpropylpyridin, 2,4,6-Trimethylpyridin, Chinolin, Tripropylamin, Isochinolin, N-Ethylmorpholin, Triethylendiamin und Mischungen davon ist.

14. Das Verfahren gemäß Anspruch 1, wobei der biegsame Verbund kunststoffbeschichtet ist mit Silikonoxid oder Aluminiumoxid.

15. Eine biegsame Verbundverpackung hergestellt nach dem Verfahren gemäß Anspruch 1.

## Revendications

1. Méthode de production d'un emballage à base de stratifié flexible, comprenant les étapes consistant à :
(a) appliquer un adhésif à base d'uréthane à au moins l'un d'au moins deux substrats flexibles, où les au moins deux substrats flexibles peuvent être des matériaux identiques ou différents choisis indépendamment dans le groupe constitué par les feuilles de plastique, les feuilles de métal et les feuilles de plastique métallisées ;
(b) laminer les au moins deux substrats flexibles avec l'adhésif à base d'uréthane entre les substrats afin de former un stratifié flexible ; et
(c) permettre à l'adhésif à base d'uréthane de durcir pour former un stratifié flexible ;
où l'adhésif à base d'uréthane comprend
- au moins un polyisocyanate ;
- au moins un durcisseur polyfonctionnel choisi dans le groupe constitué par les polyesters hydroxylés, les polyéthers hydroxylés, les polythioesters hydrozylés, les polyacétals hydroxylés, les polycarbonates hydroxylés, les alcools gras dimères, les estéramides, les polyéther polyols, les polyester polyols, les polycarbonate pclyols, l'éthylène glycol, le triéthylène glycol, le tétraéthylène glycol, le 1,2- et 1,3-propanediol, le 1,4- et 1,3-butanediol, le 1,6-hexanediol, le 1,8-octanediol, le néopentyl glycol, le 1,4-bis-(hydroxyméthyl)cyclohexana, le bis-(hydroxyméthyl)-tricyclo[5.2.1.0^{2,6}]décane, le 2-méthyl-1,3-propanediol, le 2,2,4-triméthylpertanediol, le 2-éthyl-1,3-hexanediol, le dipropylène glycol, les polypropylène glycols, le dibutylène glycol, les polybutylène glycols, le bisphénol A, le tétrabromobisphénol A, le glycérol, le triméthylolpropane, le 1,2,6-hexanetriol, le 1,2,4-butanetriol, le pentaérythritol, le quinitol, le mannitol, le sorbitol, le méthylglycoside 1,4:3,6-dianhydrohexitol et des mélanges de ceux-ci ;
- au moins un catalyseur à base de métal choisi dans le groupe constitué par le dilaurate de dibutylétain, l'acétate stanneux, l'oxyde stannique, l'octoate stanneux, le dioctoate de dibutylétain, les mercaptures d'étain, le citrate stanneux, l'oxylate stanneux, le tetra-phénylétain, le tétra-butylécain, l'acétate de tri-n-butylétain, les dicarboxylates de di-alkylétain, les tricarboxylates de bismuth, le nitrate de bismuth, le sulfure de bismuth, les dicarboxylates de bismuth basiques et des mélanges de ceux-ci ; et
- au moins un agent de blocage de catalyseur comprenant un composé de mercapto, ou un polyphénol ayant des groupements hydroxyle adjacents, ou les deux.

2. Méthode selon la revendication 1, dans laquelle le stratifié flexible est chauffé afin d'accélérer le durcissement de l'adhésif à base d'uréthane.

3. Méthode selon la revendication 1, dans laquelle l'agent de blocage du catalyseur comprend un composé de mercapto ou un mélanges d'un composé de mercapto et d'un polyphénol ayant des groupements hydroxyle adjacents, et dans laquelle l'adhésif à base d'uréthane comprend en outre un composé oléfinique, où le composé oléfinique est choisi dans le groupe constitué par le phtalate de diallyle, l'acide acrylique, l'acide méthacrylique, l'acrylate d'alkyle, le méthacrylate d'alkyle, l'acrylamide, et des mélanges de ceux-ci.

4. Méthode selon la revendication 3, dans laquelle le stratifié flexible est exposé à un rayonnement actinique ou un faisceau d'électrons afin d'accélérer le durcissement de l'adhésif à base d'uréthane.

5. Méthode selon la revendication 1, dans laquelle les au moins deux substrats flexibles sont choisis dans le groupe constitué par une feuille de polyéthylène (PE), une feuille de polypropylène (PP), une feuille de PE/FF à PP orienté, du PET métallisé, une feuille de nylon PP à orientation mono-axiale, une feuille de polyester, une feuille de mylar, une feuille de styrène, une feuille de polycarbonate, une feuille d'acrylique, une feuille d'acétal, une feuille de PET, une feuille d'ABS, une feuille de PVC, une feuille de PTFE, une feuille de HIPS, une feuille d'EVOH et une feuille de PP/EVOH.

6. Méthode selon la revendication 1, dans laquelle le au moins un polyisocyanate est choisi dans le groupe constitué par le diisocyanate d'hexaméthylène, le diisocyanate d'hexaméthylène trimère, le diisocyanate, de tétraméthylxylylène, le diisocyanate de 4,4'-toluène (TDI), le diisocyanate de diphénylméthane (MDI), le polyméthyl-isocyanate de polyphényle (MDI polymère ou PAPI), les diisocyanates de m- et p-phénylène, le diisocyanate de bitolylène, le triisocyanate de triphénylméthane, le thiophosphate de tris-(4-isocyanatophényl), le diisocyanate de cyclohexane (CHDI), le bis-(isocyanatométhyl)cyclohexane (H₆XDI), le diisocyanate de dicyclohexylméthane (H₁₂MDI), le diisocyanate de triméthylhexane, le diisocyanate d'acide dimère (DDI), le diisocyanate de dicyclohexylméthane, et les dérivés diméthylés de ceux-ci, le diisocyanate de triméthylhexaméthylène, le diisocyanate de lysine et son méthylester, le diisocyanate, d'isophorone, le diisocyanate de méthylcyclohexane, le diisocyanate de méthylène-dicyclohexane, le diisocyanate d'isophorone, le diisocyanate de 1,5-naphtalène, le triisocyanate de triphénylméthane, le diisocyanate de xylylène et les dérivés méthylés et hydrogénés de celui-ci, les polyphényl-isocyanates de polyméthylène, le chlorophénylène-2,4-diisocyanate et des mélanges de ceux-ci.

7. Méthode selon la revendication 1, dans laquelle l'adhésif à base d'uréthane comprend un composé de mercapto comme agent de blocage de catalyseur, le composé de mercapto est choisi dans le groupe constitué par le tri-(3-mercaptopropionate) de triméthylolpropane, le tétra-(3-mercaptopronioriate) de pentaérythritol, le di-(3-mercaptopropioriate) de glycol, le dimercaptoacétate de glycol, le trithioglycolate de triméthylolpropane, le mercaptodiéthyléther, l'éthane dithiol, l'acide thiolactique, l'acide mercaptopropionique et les esters de ceux-ci, le thiophénol, l'acide thioacétique, le 2-mercaptoéthanol, le 1,4-butanedithiol, le 2,3-dimercaptopropanol, le toluène-3,9-dithiol, 1'α,α'-dimercapto-para-xylène, l'acide thiosalicylique, l'acide mercaptoacétique, le dodécane dithiol, le didodécane dithiol, le di-thiophénol, le di-parachlorothiophénol, le dimercaptobenzothiazole, le 3,4-dimercaptotoluène, l'allyl-mercaptan, le benzyl-mercaptan, le 1,6-hexanedithiol, le 1-octanethiol, le para-thiocrésol, le 2,3,5,6-tétrafluorothiophénol, le cyclohexyl-mercaptan, le thioglycolate de méthyle, diverses mercaptopyridines, le dithioérythritol, le 6-éthoxy-2-mercaptobenzothiazole, le d-limonène dimercaptan γ-mercapto silane, et des mélanges de ceux-ci ; ou dans laquelle l'adhésif à base d'uréthane comprend un polyphénol ayant des groupements hydroxy adjacents comme agent de blocage de catalyseur, le polyphénol ayant des groupements hydroxy adjacents étant choisis dans le groupe constitué par le catéchol, le pyrogallol, le 3-méthoxycatéchol, un dérivé de catéchol tel qu'illustré dans la formule I 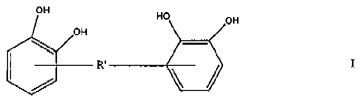 dans laquelle R' est un groupement organique divalent, et des mélanges de ceux-ci.

8. Méthode selon la revendication 1, dans laquelle les au moins deux substrats flexibles avec l'adhésif à base d'uréthane entre les substrats sont joints par passage à travers un point de coincement entre deux cylindres où une pression est appliquée, et où l'un des cylindres, ou les deux, sont éventuellement chauffés.

9. Méthode selon la revendication 4, dans laquelle les au moins deux substrats flexibles avec l'adhésif à base d'uréthane entre les substrats sont joints par passage à travers un point de coincement entre deux cylindres où une pression est appliquée, où l'un des cylindres, ou les deux, sont éventuellement chauffés, et où les au moins deux substrats flexibles avec l'adhésif à base d'uréthane entre les substrats sont exposés à un rayonnement actinique préalablement au passage à travers le point de coincement.

10. Méthode selon la revendication 1, dans laquelle au moins l'un des au moins deux substrats flexibles contient un imprimé, et éventuellement où l'imprimé est imprimé par au moins une méthode d'impression choisie dans le groupe constitué par une méthode à base d'eau, une méthode à base de solvant et une méthode à base de rayonnement.

11. Méthode selon la revendication 1, dans laquelle l'adhésif à base d'uréthane est appliqué à au moins une tête de cylindre de laminoir lisse puis transféré sur au moins un des au moins deux substrats flexibles.

12. Méthode selon la revendication 1, dans laquelle l'adhésif à base d'uréthane comprend en outre un solvant, où éventuellement, le solvant est choisi dans le groupe constitué par une cétone, la MEK, la MIBK, un solvant aromatique, le toluène, le xylène, un solvant aliphatique, l'hexane, le cyclohexane, un ester, l'acétate d'éthyle, le THF, et des mélanges de ceux-ci.

13. Méthode selon la revendication 1, dans laquelle l'adhésif à base d'uréthane comprend en outre une amine tertiaire, où éventuellement, l'amine tertiaire est la triéthylamine, la diméthyléthylamine, la tétraméthyléthylènediamine, la triméthylamine, la tributylamine, la diméthylbenzylamine, la diméthylcyclohexylamine, la diméthyléthanolamine, la diéthyléthanolamine, la triéthanolamine, la pyridine, la 4-phénylpropylpyridine, la 2,4,6-collidine, la quinoléine, la tripropylamine, l'isoquinoléine, la N-éthylmorpholine, la triéthylènediamine, et des mélanges de celles-ci.

14. Méthode selon la revendication 1, dans laquelle le stratifié flexible est un plastique revêtu d'oxyde de silicium ou d'oxyde d'aluminium.

15. Matériau d'emballage à base de stratifié flexible manufacturé par la méthode selon la revendication 1.
